Europäisches Patentamt

European Patent Office

Office européen des brevets

(11) Publication number: **0 288 611**
**A1**

## EUROPEAN PATENT APPLICATION

(21) Application number: **87200791.9**

(22) Date of filing: **27.04.87**

(51) Int. Cl.⁴ **A01B 59/06 , A01B 59/043**

(43) Date of publication of application:
**02.11.88 Bulletin 88/44**

(84) Designated Contracting States:
**AT BE CH DE ES FR GB LI NL**

(71) Applicant: **Mondino, Giuseppe**
**Via Rondisone, 1**
**I-10035 Mazze' (TO)(IT)**

(72) Inventor: **Mondino, Giuseppe**
**Via Rondisone, 1**
**I-10035 Mazze' (TO)(IT)**

(74) Representative: **Lotti, Giorgio**
**c/o Ing. Barzanò & Zanardo Milano S.p.A. Via**
**Cernaia 20**
**I-10122 Torino(IT)**

(54) **Connection device for connecting a three-point attachment of a tractor to an implement towed by this latter.**

(57) A connection device for connecting a three-point attachment of a tractor, of the type in which the upper arm is formed by a hydraulic or pneumatic cylinder (9), to the implements (13) towed by the tractor (10), comprises a first substantially V-shaped frame hinged at its apexes to the arms of the three-point attachment of the tractor, and a second frame, substantially V-shaped as well, rigidly connected to the framework of the implement; the rod of the piston (9) is hinged directly to the first frame in a position in register with its apex where means for hooking and lifting the implement (13) are provided which are arranged to cooperate with corresponding means of the second frame; there are also provided means for hooking the first frame which are formed in register with the hinging points thereon of the lower arms of the three-point attachment, said means being arranged to cooperate with corresponding means of the second frame at the moment of termination of the implement hooking and lifting stage in order to rigidly connect said frames to one another.

Fig.1

# CONNECTION DEVICE FOR CONNECTING A THREE-POINT ATTACHMENT OF A TRACTOR TO AN IMPLEMENT TOWED BY THIS LATTER

This invention relates to a device for connecting a three-point attachment of a tractor to an implement towed by tractor itself.

It is known that the connection of a three-point attachment of a tractor to an implement often involves problems particularly when the hooking is carried out on non-level surfaces, such as for example ploughed or anyhow disconnected grounds.

In fact, it is necessary for the tractor and the implement to be aligned and of the same level and thus allow performing the whole operation with the minimum effort; in practice, the farmer is compelled to carry out various complex and laborious operations to hook the implement.

This requires even manual efforts which also involve a loss of time deducted from the working of the ground.

The present invention proposes therefore to provide a device which will allow an easy and quick hooking between the three-point attachment of the tractor and an implement, whatever the nature of the ground and the mutual position of the implement and the tractor may be.

By means of said device, the alignment and hooking operations between the three-point attachment and the implement are performed automatically, thus completely avoiding the manual efforts and reducing the time required to carry out the alignment and the hooking of the tractor and the implement to one another.

The Applicant has filed the patent application for a Utility Model Nr. 52807-B/85 of January 7-th, 1985, concerning a device adaptable to a largely used type of three-point attachment in which the upper arm is kinematic.

Instead, the object of the present patent application is to provide a device adaptable to a largely used type of three-point attachment whose upper arm is formed by an hydraulic or pneumstic piston.

To attain these objects, the present invention proposes to provide a device for connecting a three-point attachment of a tractor, of the type in which the upper arm is formed by a hydraulic or pneumatic cylinder, to the implements towed by the tractor, comprising a first substantially V-shaped frame hinged at its apexes to the arms of the three-point attachment of the tractor, and a second frame, substantially V-shaped as well, rigidly connected to the framework of the implement characterized in that the piston rod is directly hinged to the first frame in a position in register with its apex where means for hooking and lifting the implement are provided which are arranged to cooperate with corresponding means of the second frame, there being provided also means for hooking the first frame which are formed in register with the hinging points thereon of the lower arms of the three-point attachment, said means being arranged to cooperate with corresponding means of the second frame at the moment of termination of the implement hooking and lifting stage in order to rigidly connect said frames to one another.

The device according to the invention is described hereinbelow with reference to the annexed drawings in which:

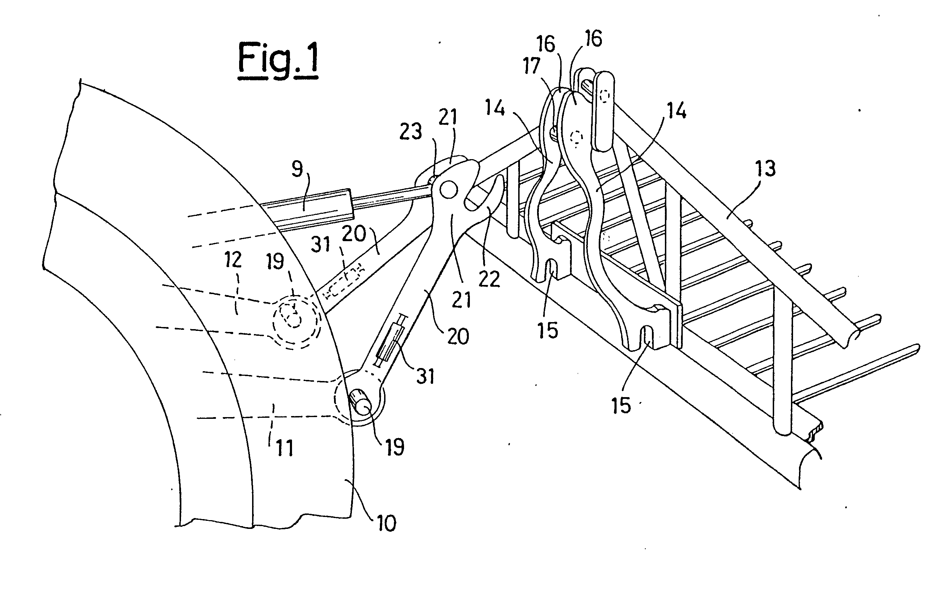

FIGURE 1 is a perspective view of a tractor and an implement which are provided with the device according to the invention;

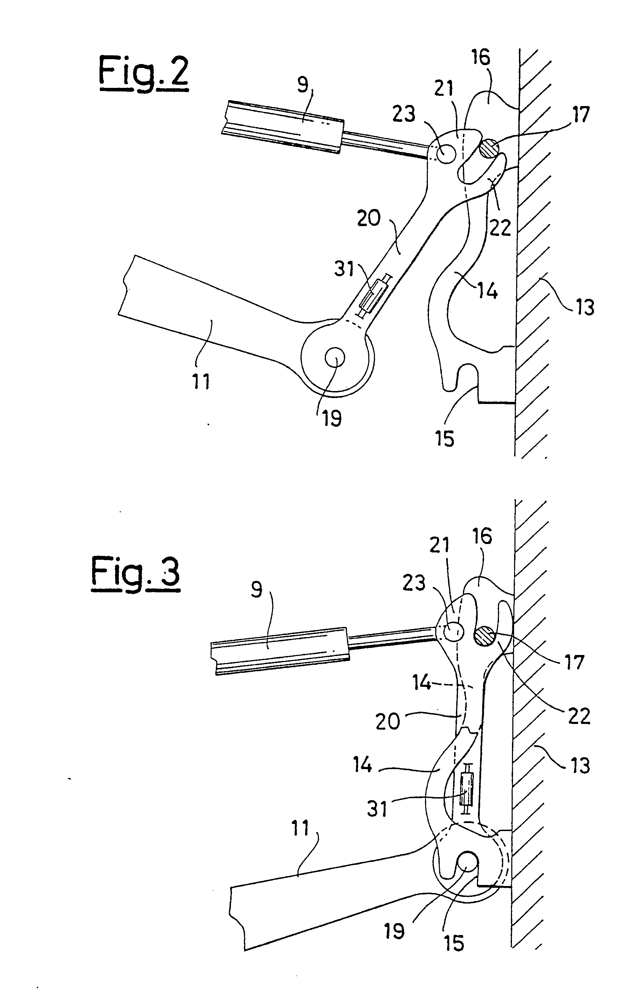

FIGURES 2 and 3 are views illustrating the stages of hooking and lifting the implement to the tractor by means of the device according to the invention, respectively.

Normally, mounted on a tractor is the three-point attachment formed by tow arms 11 and 12 and by the hydraulic or pneumatic piston 9 comparable to the third arm of the attachment.

Hinged at the end of the three arms to the rod of the rod of the piston 9 at 23 and to the lower arms 11 and 12 at 19, respectively, is an inverted V-shaped rigid frame; this frame possesses in register with the apex 21 a hook appendix 22.

Applied to the implement 13 is a rigid frame 14, as well shaped like an inverted V, which is provided with grooves 15 on the lower apexes.

Formed in register with the upper apex 16 of the frame 14, but below this latter, is a pin 17 between the arms of said frame.

The device described herein operates as follows.

Tractor 10 approaches the implement 13 until the hook appendix 22 of the frame 20 engages the pin 17, with the piston 9 completely extended.

The hooking takes place in only one point, and thus the implement may also be laterally inclined relative to the tractor, because the hook 22 reaches the support 17 anyhow.

After the hooking has been performed, the retraction stage of the piston 9 initiates, thus giving rise to the vertical alignment of the implement until the pins 19 of the arms 11 and 12 are positioned beneath the grooves 15 of the frame 14.

The facilitate the alignment during this stage onto the arms of the frame 20 there may be mounted idle rollers 31 on which the frame 14 slides thus becoming selfcentered during the lifting stage.

At the end of the lifting and alignment stage of the implement 13 because of the combined action of the arms 11 and 12 and the cylinder 9 during its retraction, the grooves 15 of the frame 14 will insert onto the pins 19 of the arms 11 and 12 which support the implement 13.

At this point, the connection between the tractor and the implement is ensured by the three-point attachment, and the function of the device, which consisted in centering the implement relative to the three-point attachment whatever the mutual orientation might have been, is discontinued.

## Claims

1.-A device for connecting a three-point attachment of a tractor, of the type in which the upper arm is formed by a hydraulic or pneumatic cylinder, to the implements towed by the tractor, comprising a first substantially V-shaped frame hinged at its apexes to the arms of the three-point attachment of the tractor, and a second frame substantially V-shaped as well, rigidly connected to the framework of the implement, characterized in that the piston rod is directly hinged to the first frame in a position in register with the apex where means for hooking and lifting the implement are provided which are arranged to cooperate with corresponding means of the second frame, there being provided also means for hooking the first frame which are formed in register with the hinging points thereon of the lower arms of the three-point attachment, said means being arranged to cooperate with corresponding means of the second frame at the moment of termination of the implement hooking and lifting stage in order to rigidly connect said frames to one another.

2.-A device as claimed in Claim 1, characterized in that the first frame hooking and lifting means are constituted by a hook appendix formed on the apex of the frame, whilst the hooking means of the second frame which cooperate with said hook appendix are formed by pins extending from the apex of the second frame.

# Fig.1

0 288 611

# Fig.2

# Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | WO-A-8 102 086 (BERCATO)<br>* Abstract; page 3-5; figure 8 *<br>--- | 1 | A 01 B 59/06<br>A 01 B 59/043 |
| X | WO-A-8 202 814 (LIDGREN)<br>* Abstract; figures 1,3 *<br>--- | 1,2 | |
| X | DE-B-1 200 595 (STOLL)<br>* Whole document *<br>--- | 1 | |
| X | DE-A-1 958 640 (ALLIS-CHALMERS)<br>* Pages 4-5; figures 1-5 *<br>----- | 1,2 | |

TECHNICAL FIELDS
SEARCHED (Int. Cl.4)

A 01 B

The present search report has been drawn up for all claims

| Place of search | Date of completion of the search | Examiner |
|---|---|---|
| THE HAGUE | 27-12-1987 | VON ARX V.U. |

EPO FORM 1503 03.82 (P0401)